(19) Europäisches Patentamt
European Patent Office
Office européen des brevets

(11) **EP 4 506 514 A1**

(12) **EUROPEAN PATENT APPLICATION**
published in accordance with Art. 153(4) EPC

(43) Date of publication:
**12.02.2025 Bulletin 2025/07**

(21) Application number: 23784704.1

(22) Date of filing: **30.03.2023**

(51) International Patent Classification (IPC):
*E02F 9/26* (2006.01)     *G01C 9/06* (2006.01)
*G01C 15/00* (2006.01)

(52) Cooperative Patent Classification (CPC):
**E02F 9/26; G01C 9/06; G01C 15/00**

(86) International application number:
**PCT/JP2023/013427**

(87) International publication number:
**WO 2023/195417 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.04.2022 JP 2022064338**

(71) Applicant: Hitachi Construction Machinery Co.,
Ltd.
**Tokyo 110-0015 (JP)**

(72) Inventors:
• ISHIHARA, Shinji
  **Tokyo 100-8280 (JP)**
• IZUMI, Shiho
  **Tsuchiura-shi, Ibaraki 300-0013 (JP)**
• TANAKA, Hiroaki
  **Tsuchiura-shi, Ibaraki 300-0013 (JP)**
• NAKAGI, Kenta
  **Tsuchiura-shi, Ibaraki 300-0013 (JP)**

(74) Representative: **MERH-IP Matias Erny Reichl
Hoffmann
Patentanwälte PartG mbB
Paul-Heyse-Straße 29
80336 München (DE)**

(54) **CONSTRUCTION MACHINE**

(57)     It is an object of the present invention to provide a construction machine that is capable of increasing the accuracy with which to calibrate a machine guidance system or a machine control system. To achieve the object, a controller determines whether a work implement is statically determinate or not on the basis of posture data of the work implement sensed by a posture sensor during a predetermined time after an instruction has been given to calibrate conversion parameters (a mounting angle and a link length) for converting the posture data of the work implement into the coordinates of a first predetermined position (bucket claw tip position) of the work implement, and, when determining that the work implement is statically determinate, calculates updated values of the conversion parameters on the basis the posture data of the work implement sensed by the posture sensor during the predetermined time and the coordinates of a second predetermined position (pin position) of the work implement measured by an external measuring device after the instruction has been given to calibrate the conversion parameters.

FIG. 7

## Description

Technical Field

The present invention relates to a construction machine such as a hydraulic excavator having a front work implement, and particularly to a construction machine incorporating a machine guidance system or a machine control system.

Background Art

With a view to adapting to an observational construction control system, there have been developed hydraulic excavators having a function of machine guidance for displaying, to the operator, the positions and postures of work mechanisms including a boom, an arm, and a bucket, or a function of machine control for controlling the positions of the work mechanisms to move along a target formation surface.

A system of performing work assistance such as machine guidance or machine control using the coordinates of an own construction machine at a construction site is referred to as a three-dimensional observational construction control system (3D observational construction control system). Construction machines that are compatible with the 3D observational construction control system include a GNSS (Global Navigation Satellite System) for acquiring the position of their own machines. Construction machines that include a front work implement, such as hydraulic excavators, require not only their own position but also the directions (azimuth) in which their work implements face, for work assistance. Therefore, there have been known construction machines that have two GNSS antennas on their upper swing structures.

In a machine guidance system, since various pieces of information are presented to the operator such that the tip end of a bucket (a claw tip position) moves along a target formation surface, not only the position of the own construction machine but also the posture information of the front work implement is important. Therefore, the construction machine incorporates some sensors for acquiring the angles of a boom, an arm, and the bucket. IMU (Inertial Measurement Unit) sensors are often selected as the angle sensors because of the ease with which to install them and their responsiveness.

The machine guidance system calculates the claw tip position using the angles of tilt of various parts (a boom, an arm, and a bucket) of the front work implement. An IMU sensor acquires its own angle of tilt. The angle of tilt of an IMU sensor is converted into an angle of tilt of a member to which the IMU sensor is attached, using the "mounting angle" that represents an angle through which the IMU sensor is rotated and attached to the member. Since the accuracy of the angle of tilt of each member affects the accuracy with which to calculate claw tip coordinates, it is necessary to accurately acquire the mounting angle. Work of updating parameters required to compute claw tip coordinates into accurate values is referred to as calibration. Patent Document 1 referred to below is a prior art document that discloses a calibration method for the mounting angle.

Prior Art Documents

Patent Document

Patent Document 1: JP-2017-181340-A

Summary of the Invention

Problems to be Solved by the Invention

Patent Document 1 presents a method of acquiring the coordinates of joint portions (pivot pin centers), about which members rotate, with use of an external measuring apparatus (total station), and calculating mounting angles by comparing the angles of tilt of the members that are calculated from the coordinates and angles of tilts outputted from tilt sensors (IMU sensors).

For example, when acquiring the mounting angle of an IMU sensor mounted on a boom, the coordinates $(x0, y0, z0)$ of a boom foot pin position p0 and the coordinates $(x1, y1, z1)$ of a boom tip pin position p1 are acquired from the total station. If a front work implement is installed parallel to the coordinate axis X of the total station (i.e., $y0 = y1$ is satisfied), then the angle $\theta BM\text{-}TS$ of the boom is given by the equation 1.

[Equation 1]

$$\theta_{BM-TS} = \tan^{-1}\left(\frac{z1 - z0}{x1 - x0}\right)$$

Concurrent with the above work, by recording the angle $\theta$BM-TS output by the IMU sensor, a mounting angle $\Delta\theta$BM can be calculated according to the equation 2.

[Equation 2]

$$\Delta\theta_{BM} = \theta_{BM-TS} - \theta_{BM-IMU}$$

The total station is incapable of simultaneously acquiring the coordinates, and hence measures the coordinates of one point after another. Consequently, if the posture of the hydraulic excavator varies at the time where the coordinates are acquired, no correct mounting angle may possibly be calculated. For example, it is assumed that the work is carried out successively through three steps of [1] acquiring the coordinates of a boom foot pin position p0, [2] acquiring the angle information of an IMU sensor, and [3] acquiring the coordinates of a boom tip pin position p1. In this work, if the coordinates of the boom tip pin position p1 vary from (x1, y1, z1) to (x1+$\delta$x, y1+$\delta$y, z1+$\delta$z) during work from [2] to [3], the angle $\theta$BM-TS of the boom is expressed by the equation 3.

[Equation 3]

$$\theta_{BM-TS} = \tan^{-1}\left(\frac{z1 + \delta z - z0}{x1 + \delta x - x0}\right)$$

Inasmuch as the angles $\theta$BM-TS calculated respectively by the equations 1 and 3 are different from each other, the mounting angles $\Delta\theta$BM are calculated as different values. In other words, if the posture of the front work implement varies during the calibration work, no correct mounting angle may possibly be acquired.

As a matter of course, the operator is prompted to be careful not to operate the lever so as to prevent the posture from varying during the calibration work. However, the front work implement can vary in posture even when the operator does not operate the level intentionally.

For example, since the front work implement is actuated by hydraulic cylinders, if the hydraulic fluid is expanded or contracted due to temperature changes, then cylinder lengths are varied, tending to cause the posture to vary. In addition, if the hydraulic fluid leaks, the cylinders have their bottom pressures or rod pressures dropping, resulting in cylinder length variations. Even in the absence of cylinder length variations, if the hydraulic excavator is placed on soft soil terrain, the hydraulic excavator may sink into the ground due to its own gravity. When the hydraulic excavator sinks into the ground, the coordinates measured by the total station are liable to vary, and the mounting angles cannot accurately be acquired, possibly reducing the accuracy of calibration.

The present invention has been made in view of the above problems. It is an object of the present invention to provide a construction machine that is capable of increasing the accuracy with which to calibrate a machine guidance system or a machine control system.

Means for Solving the Problems

In order to achieve the above object, according to the present invention, there is provided a construction machine including a lower track structure, an upper swing structure rotatably mounted on the lower track structure, a multi-joint work implement rotatably mounted on the upper swing structure, a posture sensor mounted on the work implement, and a controller that is configured to convert posture data of the work implement, the posture data being sensed by the posture sensor, into coordinates of a first predetermined position of the work implement by using predetermined conversion parameters, the controller being configured to calculate updated values of the conversion parameters to perform calibration on the basis of the posture data of the work implement, the posture data being sensed by the posture sensor, and coordinates of a second predetermined position of the work implement, the coordinates being measured by an external measuring device, in which the controller is configured to determine whether the work implement is statically determinate or not on the basis of the posture data of the work implement, the posture data being sensed by the posture sensor during a predetermined time after an instruction to calibrate the conversion parameters has been given, and when determining that the work implement is statically determinate, calculate updated values of the conversion parameters on the basis of the posture data of the work implement sensed by the posture sensor during the predetermined time and the coordinates of the second predetermined position, the coordinates being measured by the external measuring device after the instruction to calibrate the conversion parameters has been given.

According to the present invention configured as described above, conversion parameters for converting the posture data of a work implement into the coordinates of a first predetermined position of the work implement are updated using the posture data and coordinates of the work implement that have been acquired while the work implement is in its statically determinate state. Therefore, the accuracy with which to calibrate a machine guidance system or a machine control system can be increased.

Advantages of the Invention

The construction machine according to the present invention is capable of increasing the accuracy with which to calibrate a machine guidance system or a machine control system.

Brief Description of the Drawings:

FIG. 1 is a perspective view schematically illustrating the appearance of a hydraulic excavator according to a first embodiment of the present invention.
FIG. 2 is a diagram schematically illustrating the processing functions of a controller according to the first embodiment of the present invention.
FIG. 3 is a functional block diagram of the controller according to the first embodiment of the present invention.
FIG. 4 is a set of views illustrating examples of contents displayed on a monitor when calibration is executed.
FIG. 5 is a set of views illustrating examples of IMU data recorded in a posture sensing result recording section.
FIG. 6 is a flowchart of the processing sequence of a calibration executing section according to the first embodiment of the present invention.
FIG. 7 is a functional block diagram of a controller according to a second embodiment of the present invention.
FIG. 8 is a flowchart of the processing sequence of a calibration executing section according to the second embodiment of the present invention.
FIG. 9 is a set of explanatory views of effects of the coordinate axes set by an external measuring device on coordinate measurement.
FIG. 10 is a set of views illustrating an example of posture at the time where calibration is executed.
FIG. 11 is a functional block diagram of a controller according to a modification of a third embodiment of the present invention.
FIG. 12 is a diagram illustrating an image of data recorded in the controller according to the third embodiment of the present invention.
FIG. 13 is a flowchart of the processing sequence of a calibration executing section according to the third embodiment of the present invention.
FIG. 14 is a functional block diagram of a controller according to a fourth embodiment of the present invention.
FIG. 15 is a flowchart of the processing sequence of a calibration executing section according to the fourth embodiment of the present invention.

Modes for Carrying Out the Invention

A hydraulic excavator as an example of construction machines according to embodiments of the present invention will be described below with reference to the drawings. Throughout figures, identical members are denoted by identical reference characters and their redundant description will be omitted where appropriate.

[First Embodiment]

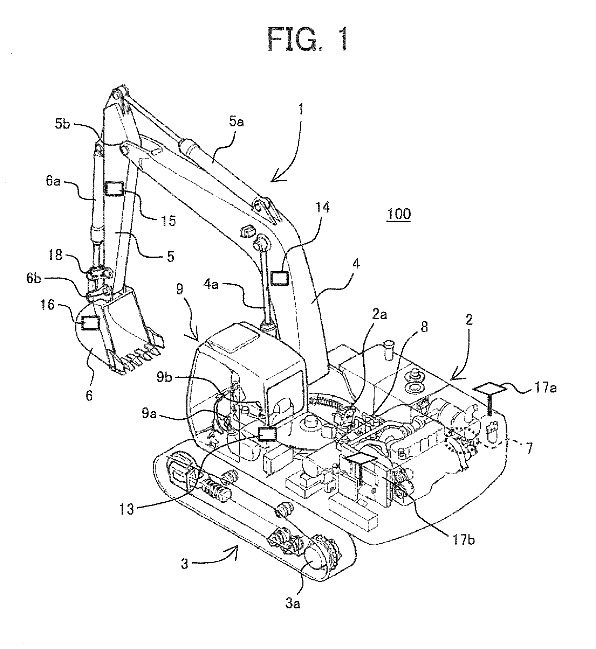

FIG. 1 is a perspective view schematically illustrating the appearance of a hydraulic excavator according to a first embodiment of the present invention. As illustrated in FIG. 1, a hydraulic excavator 100 includes: a multi-joint front working implement 1 having a plurality of front members (a boom 4, an arm 5, and a bucket (work tool) 6), each of which rotate in vertical directions, linked together; and an upper swing structure 2 and a lower track structure 3 that make up a machine body. The upper swing structure 2 is swingably provided with respect to the lower track structure 3.

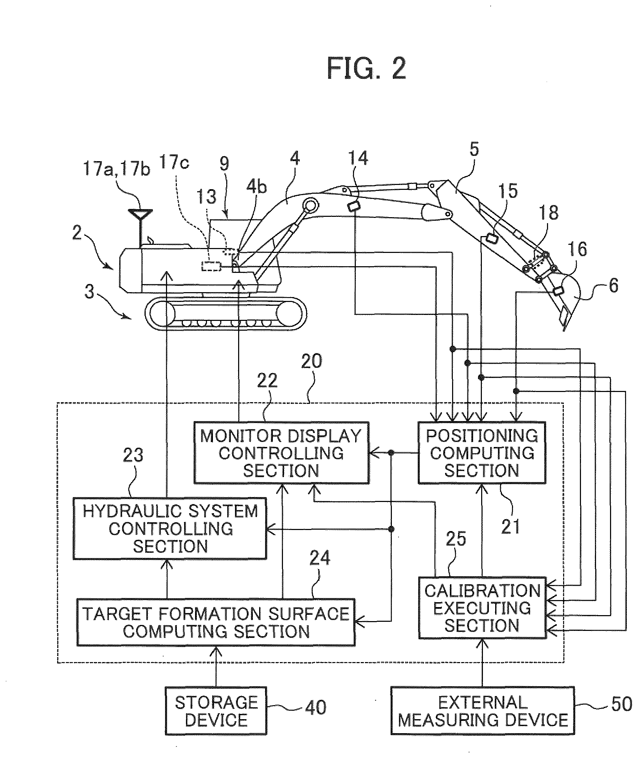

The boom 4 of the front work implement 1 has a proximal end vertically rotatably supported on a front portion of the upper swing structure 2. The arm 5 has an end vertically rotatably supported on another end (distal end) of the boom 4, and has another end (distal end) on which the bucket 6 is vertically rotatably supported. The boom 4 rotates about a boom foot pin 4b (illustrated in FIG. 2), the arm 5 rotates about an arm pin (boom distal end pin) 5b, and the bucket 6 rotates about a bucket pin 6b. The boom 4, the arm 5, the bucket 6, the upper swing structure 2, and the lower track structure 3 are actuated respectively by hydraulic actuators including a boom cylinder 4a, an arm cylinder 5a, a bucket cylinder 6a, a swing motor (not depicted), and left and right track motors 3a (only one depicted).

In a cabin 9 in which operator gets includes operation levers 9a and 9b that output operation signals for operating the hydraulic actuators 2a through 6a. The operation levers 9a and 9b are tiltable in forward, rearward, leftward, and rightward directions to which operation of the hydraulic actuators 2a to 6a are assigned. The operation levers 9a and 9b include sensors (not depicted) for electrically detecting tilted amounts of the levers (lever operation amounts), which are represented by the operation signals, and output the lever operation amounts sensed by the sensors to a controller 20 through electric wiring.

Operation control of the boom cylinder 4a, the arm cylinder 5a, the bucket cylinder 6a, the swing motor 2a, and the left and right track motors 3a are performed by controlling, by a control valve 8, the directions and flow rates of a hydraulic fluid supplied from a hydraulic pump device 7 actuated by a prime mover such as an engine or an electric motor to the hydraulic actuators 2a to 6a. The control valve 8 is operated by a drive signal (pilot pressure) outputted from a pilot pump (not depicted) through a solenoid proportional valve. The controller 20 controls the solenoid proportional valve on the basis of the operation signals from the operation levers 9a and 9b to control operation of the hydraulic actuators 2a to 6a. Note that the operation levers 9a and 9b may be a hydraulic pilot type. In this case, the operation levers 9a and 9b include pilot valves (not depicted) for outputting pilot pressures in response to the lever operation amounts, and the control valve 8 is operated by the pilot pressures outputted from the pilot valves.

The upper swing structure 2 includes an inertial measurement unit (IMU) 13 as a posture sensor. The inertial measurement unit 13 measures angular velocity and acceleration, and configures a posture sensor. Providing the upper swing structure 2 that includes the inertial measurement unit 13 is standing still, a tilt (pitch angle) of the upper swing structure 2 in the forward or rearward direction and a tilt (roll angle) of the upper swing structure 2 in the leftward or rightward direction can be calculated on the basis of the direction of gravitational acceleration (in the vertically downward direction) in an IMU coordinate system set on the inertial measurement unit 13 and the state in which the inertial measurement unit 13 is mounted (the relative positional relationship between the inertial measurement unit 13 and the upper swing structure 2). Note that, since the IMU incorporates an angular velocity sensor therein, an angle of rotation (yaw angle) of the upper swing structure 2 can be calculated by integrating an angular velocity. However, it is necessary to pay attention to the fact that it is not easy to calculate an accurate angle of rotation since the angular velocity sensor has a steady error (gyro bias). According to the present embodiment, it is assumed that the function to compute the above tilts (angles) is incorporated in the inertial measurement unit, but, if the angle calculating function is not incorporated in the inertial measurement unit, the angle computing function may be incorporated in the controller 20 to be described later.

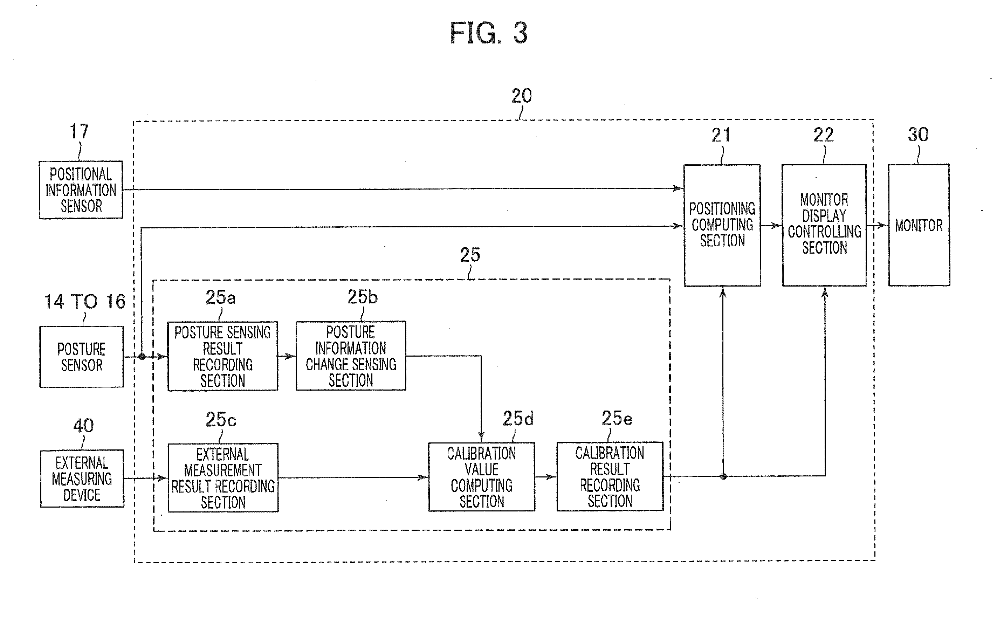

Two GNSS antennas 17a and 17b are mounted on the upper swing structure 2. Satellite signals received by the respective GNSS antennas 17a and 17b are input to a GNSS receiver 17c (illustrated in FIG. 2) and used in various positioning computations such as antenna coordinate computations and azimuth angle computations. The GNSS antennas 17a and 17b and the GNSS receivers 17c configure a positional information sensor 17 (illustrated in FIG. 3).

The GNSS receiver 17c performs RTK (Real Time Kinematic) positioning on positional information when it is connected to a GNSS fixed station installed at the site via wireless communication. When there is no GNSS fixed station at the site, networked RTK positioning for acquiring information of an electronic reference station via the Internet may be used. It will be assumed hereinbelow that the GNSS receiver 17c is capable of performing RTK positioning regardless of whether there is a fixed station at the site or not.

The boom 4, the arm 5, and the bucket 6 as the components of the front work implement 1 have respective inertial measurement units 14 to 16 installed in appropriate positions thereon for measuring respective postures of the components. The inertial measurement units 14 to 16 also configure posture sensors as is the case with the inertial measurement unit 13 mounted to the upper swing structure 2. To differentiate between the inertial measurement units 13 to 16, they will also be referred to as a machine body IMU 13, a boom IMU 14, an arm IMU 15, and a bucket IMU 16, respectively, reflecting the locations where they are installed. Note that the bucket IMU 16 may be installed on a link member (bucket link) 18 that can rotate in conjunction with the bucket 6, rather than on the bucket 6. When an IMU is installed on the bucket link member 18, a tilt of the bucket link member 18 may be converted into a tilt of the bucket 16 using the geometric relationship between them.

FIG. 2 is a diagram schematically illustrating the processing functions of the controller 20 incorporated in the hydraulic excavator 100. As illustrated in FIG. 2, the controller 20 has various functions for controlling operation of the hydraulic excavator 100, and include, as some of the processing functions, a positioning computing section 21, a monitor display controlling section 22, a hydraulic system controlling section 23, a target formation surface computing section 24, and a calibration executing section 25. In FIG. 2, although the processing functions 21 to 25 are illustrated as being performed by one controller, the processing functions may be performed by a plurality of controllers. For example, if the hydraulic excavator 100 includes five controllers, then the processing functions 21 to 25 may be performed by respective different controllers. The calibration executing section 25 may not be included in the controller 20 incorporated in the hydraulic excavator 100, but may be included in another terminal.

The positioning computing section 21 performs a posture computing process for calculating coordinates and an azimuth of the hydraulic excavator 100 at the site and posture data of the front work implement 1 on the basis of the positional information calculated by the GNSS receiver 17c and the sensing results from the inertial measurement units 13 to 16. In order for the positioning computing section 21 to calculate posture data of the front work implement 1, it is necessary to use various dimensions (link lengths to be described later) of the hydraulic excavator 100 and mounting information (mounting angles) on the sensors as conversion parameters. Work of updating these conversion parameters into accurate values (hereinafter, updated values) will be referred to as calibration. Computations relating to such calibration are carried out by the calibration executing section 25.

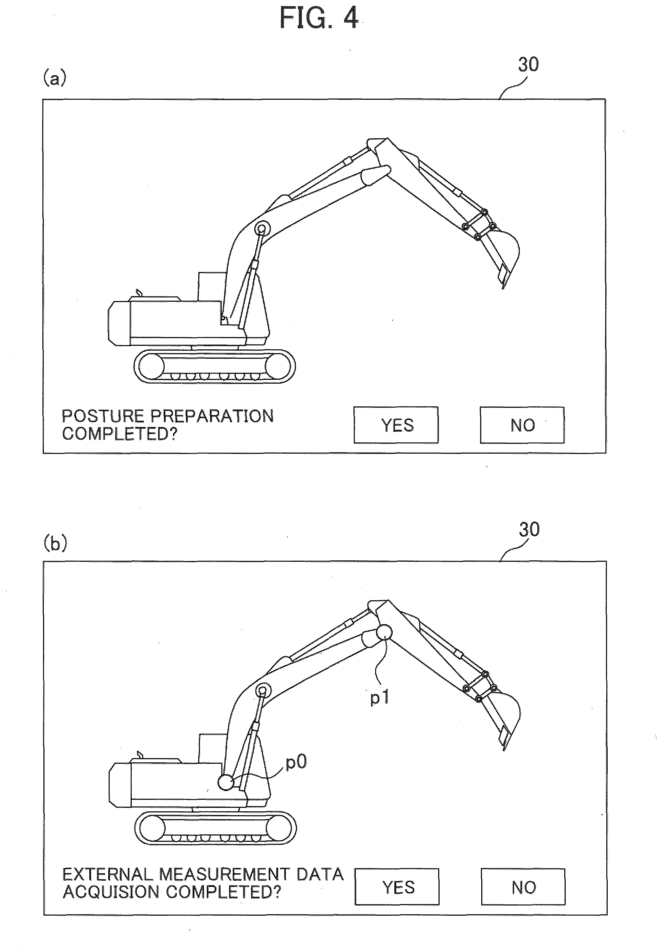

The monitor display controlling section 22 controls displaying of a monitor 30 (illustrated in FIG. 4) disposed in the cabin 9, and calculates contents of instructions for operation assistance for the operator on the basis of the target formation surface calculated by the target formation surface computing section 24 and the posture data of the front work implement 1 calculated by the positioning computing section 21, and displays the calculated contents. Specifically, for example, the monitor display controlling section 22 performs part of a function as a machine guidance system to assist the operator in performing operations, by displaying, on the monitor 30, the postures of the front work implement 1 that has driven members including the boom 4, the arm 5, and the bucket 6, and the tip end position and angle of the bucket 6. It is desirable for the monitor 30 not to be a simple display device, but to be replaced with a tablet terminal including a touch panel, so that it can be used as an input device. The monitor 30 will hereinafter be described as such a tablet terminal.

The hydraulic system controlling section 23 controls a hydraulic system of the hydraulic excavator 100 that includes the hydraulic pump device 7, the control valve 8, the hydraulic actuators 2a to 6a, and the like, and calculates operation of the front work implement 1 on the basis of the target formation surface calculated by the target formation surface computing section 24 and the posture data of the front work implement 1 calculated by the positioning computing section 21, and controls the hydraulic system of the hydraulic excavator 100 so as to realize the calculated operation. Specifically, for example, the hydraulic system controlling section 23 performs part of a function as the machine guidance system to limit operation by preventing the tip end of the bucket 6 from becoming closer to the target formation surface beyond a certain position and to control the tip end position of the bucket 6 to move along the target formation surface.

The target formation surface computing section 24 calculates a target formation surface that defines a target shape of an object to work on, on the basis of the construction information such as a three-dimensional construction drawing stored in advance in a storage device 40 by a construction manager and the positional information and posture information on the hydraulic excavator 100 calculated by the positioning computing section 21. The monitor display controlling section 22 and the target formation surface computing section 24 configure machine guidance system, and the hydraulic system controlling section 23 and the target formation surface computing section 24 configure a machine control system.

The calibration executing section 25 calculates various parameters (specifically, various dimensions of the hydraulic excavator and mounting angles of the IMU sensors) using the data acquired by the posture sensors 13 to 16 and the data acquired by an external measuring device 50. The calculated parameters are used by the positioning computing section 21 and the monitor display controlling section 22.

FIG. 3 is a functional block diagram of the controller 20. In FIG. 3, part of the functions (other than the positioning computing section 21, the monitor display controlling section 22, and the calibration executing section 25) illustrated in FIG. 2 is omitted from illustration for the sake of brevity.

The calibration executing section 25 according to the present embodiment includes a posture sensing result recording section 25a, a posture information change sensing section 25b, an external measurement result recording section 25c, a calibration value computing section 25d, and a calibration result recording section 25e.

The posture sensing result recording section 25a records sensed information outputted from the posture sensors 13 to 16. The timing to start recording the sensed information and the timing to end recording the sensed information can be changed as desired, and the starting and ending of the recording are controlled by an instruction from the operator or the controller 20 at the time of calibration work.

An example of the timing to start recording the sensed information and the timing to end recording the sensed information when the sensed information starts to be recorded according to an instruction from the operator will be described below with reference to FIG. 4. FIG. 4 illustrates examples of contents displayed on the monitor 30 at the time where calibration is executed. The operator performs an operation according to an instruction displayed on the monitor 30. An example of calibration to be executed for the boom 4 will be described below. Calibration can similarly be executed for the other members (the arm 5 and the bucket 6).

First, when calibration is started, an instruction for prompting the operator to check that the hydraulic excavator 100 has had a posture for calibration is displayed on the monitor 30 as illustrated in FIG. 4(a). If the operator judges that the hydraulic excavator 100 has achieved the posture illustrated in FIG. 4(a), then the operator taps "YES" on the screen. Triggered by the tap on "YES," the posture sensing result recording section 25a starts recording the data from the boom IMU 14. Thereafter, the monitor 30 displays an instruction regarding positions p0 and p1 where the external measuring device 50 is to acquire coordinates, as illustrated in FIG. 4(b). After the external measuring device 50 has acquired the coordinates of the positions p0 and p1 displayed on the monitor, the operator taps "YES" on the screen. In synchronism with the tap, the posture sensing result recording section 25a stops recording the data from the boom IMU 14.

Providing each of the external measuring device 50, the controller 20, and the monitor 30 is configured so as to be able to send and receive information, "YES" may be regarded as being tapped automatically when the external measuring device 50 acquires the coordinates of the positions p0 and p1 illustrated in FIG. 4(b). In other words, such a structure may be possible that the posture sensing result recording section 25a starts recording the data at the same time that the external measuring device 50 acquires the coordinates of the pin position p0 and the posture sensing result recording section 25a ends recording the data at the same time that the external measuring device 50 acquires the coordinates of the pin position p1. This function is performed by referring to the coordinate data recorded in the external measurement result recording section 25c to be described later. Moreover, the posture sensing result recording section 25a may record the data, as they are, at a sampling period (e.g., 10ms) outputted from the IMU sensor, or may record data at every period of 100ms by decimating the data outputted from the IMU sensor at equal intervals.

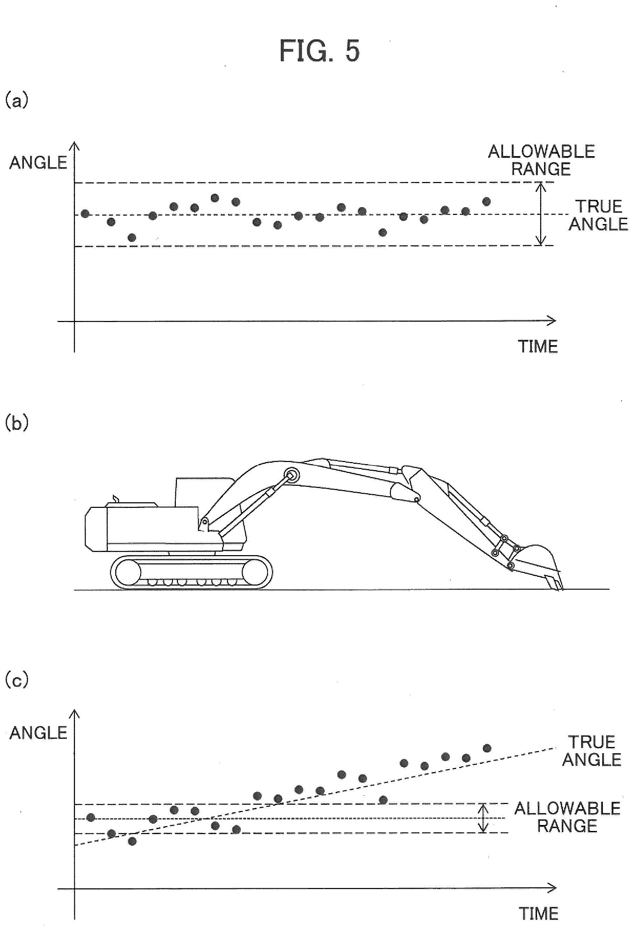

The posture information change sensing section 25b analyzes the IMU data recorded in the posture sensing result recording section 25a, and checks that the front work implement 1 undergoes no posture change at the time where calibration is executed with the posture illustrated in FIG. 4(a). A method of determining whether there is a posture change or not on the basis of the acquired IMU data will be described below with reference to FIG. 5.

FIG. 5(a) illustrates an example of the IMU data recorded in the posture sensing result recording section 25a when the posture of the front work implement 1 has not changed. Black dots in FIG. 5(a) represent data acquired at respective times.

The output from an IMU sensor always varies due to various noises and engine vibrations. Therefore, the outputs from the IMU sensors can vary even when there is no posture change. In order to prevent such output variations from being misjudged as "posture change," an allowable range is set with respect to initial values of data at respective times or an average value of overall data, and it is determined that there is no posture change unless data deviates from the allowable range. This allowable range may be set taking into account the sensor accuracy described in the specifications of the IMU sensors or may be set as $\pm 3\sigma$ using a variance value $\sigma^2$ that is obtained by analyzing the IMU data acquired from the front work implement 1 in the posture illustrated in FIG. 5(b) where the bucket claw tip is placed on the ground (preferably a surface plate) to prevent the front work implement 1 from causing a posture change.

FIG. 5(c) illustrates an example of the IMU data recorded in the posture sensing result recording section 25a when the posture of the front work implement 1 has changed. As described above, the acquired data deviate from the set allowable range. By determining the data deviation from the allowable range, a posture change can be sensed while the coordinates of the pin positions p0 and p1 illustrated in FIG. 4(b) are being acquired. Since an IMU sensor for use in machine guidance generally has an angle sensing accuracy in an approximate range from 0.1 to 0.3 degrees, it is possible to sense a slight posture change of the front work implement 1.

The external measurement result recording section 25c records coordinate data acquired by the external measuring device 50 in a storage area of the controller 20. The coordinate data represent coordinates (x, y, z) in a three-dimensional space.

The calibration value computing section 25d calculates conversion parameters using the IMU data recorded in the posture sensing result recording section 25a and the coordinate data recorded in the external measurement result recording section 25c. Inasmuch as the IMU data recorded in the posture sensing result recording section 25a have variations, an averaging process according to the equation 4, for example, is carried out to restrain the effect of the variations.

[Equation 4]

$$\bar{\theta}_{BM-IMU} = \frac{1}{N} \sum_{i=1}^{N} \theta_i$$

$\theta_i$ in the equation 4 represents the IMU data recorded in sampling step i, and N signifies the number of the IMU data recorded in the posture sensing result recording section 25a.

Assuming that the coordinates of the boom foot pin position p0 and the coordinates of the boom tip pin position p1, illustrated in FIG. 4, that are recorded in the external measurement result recording section 25c are (x0, y0, z0) and (x1, y1, z1), respectively, the angle θBM-TS of the boom 4 can be calculated according to the equation (1). using the equation 1 and the equation 4, the mounting angle ΔθBM of the boom IMU 14 can be calculated according to the equation 5 that is modeled after the equation 2.

[Equation 5]

$$\Delta\theta_{BM} = \theta_{BM-TS} - \bar{\theta}_{BM-IMU}$$

Moreover, using the coordinate data recorded in the external measurement result recording section 25c, a link length LBM of the boom 4 is given according to the equation 6.

[Equation 6]

$$L_{BM} = \sqrt{(z_1 - z_0)^2 + (x_1 - x_0)^2}$$

As described above, the equation 1 and the equation 5 are satisfied only when the posture of the front work implement 1 has not changed. Therefore, it is desirable that calculations by the calibration value computing section 25d be executed only when the posture information change sensing section 25b has sensed no posture change.

The calibration result recording section 25e records the mounting angle Δθ and the link length L calculated by the calibration value computing section 25d. If the posture information change sensing section 25b has sensed a posture change, then since the calibration value computing section 25d does no execute computations, both the mounting angle Δθ and the link length L are not recorded. The mounting angle Δθ and the link length L recorded in the calibration result recording section 25e are reflected in posture computations performed by the positioning computing section 21 and the rendering of the hydraulic excavator 100 performed by the monitor display controlling section 22.

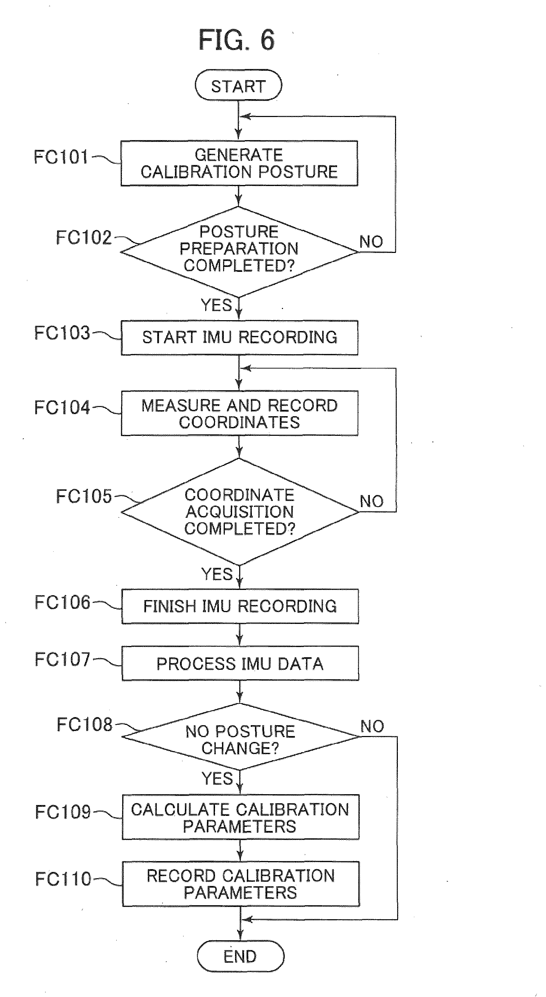

FIG. 6 is a flowchart of the processing sequence of the calibration executing section 25. The processing sequence illustrated in FIG. 6 is carried out for each of the members (the boom 4, the arm 5, and the bucket 6) of the front work implement 1. The steps of the processing sequence will be described in succession below.

First, an instruction is given to the operator to generate a predetermined posture at the time where calibration is executed, in step FC101. According to the present embodiment, the monitor display controlling section 22 displays a posture (illustrated by way of example in FIG. 4(a)) at the time where calibration is executed on the monitor 30. The operator causes the posture of the front work implement 1 to match the calibration posture displayed on the monitor 30.

Following step FC101, the calibration executing section 25 confirms with the operator whether the preparation of the posture of the front work implement 1 has been completed, in step FC102. If the operator judges that the preparation of the posture has been completed and taps "YES" on the monitor 30 illustrated in FIG. 4(a), then YES is determined in step FC102, from which control goes to step FC103. Until the preparation of the posture is completed, NO is determined in step FC102, from which control goes back to step FC101.

In step FC103, the IMU data start being recorded. This process is executed by the posture sensing result recording section 25a. After having started recording the IMU data, control goes to step FC104.

In step FC104, the external measuring device 50 measures coordinates, and the coordinates are recorded. The latter process is executed by the external measurement result recording section 25c. Until necessary coordinate data are acquired, NO is determined in step FC105, and the operator continues to have the external measuring device 50 measure coordinates. If necessary coordinate data are acquired, then YES is determined in step FC105, from which control goes to step FC106.

In step FC106, the recording of the IMU data is ended. This process is also executed by the posture sensing result recording section 25a. After having ended recording the IMU data, control goes to step FC107.

In step FC107, the recorded IMU data are processed. Then, step FC108 determines whether the posture of the front work implement 1 has changed or not. If the posture has not changed, YES is determined in step FC108, from which control goes to step FC109. Steps FC107 and FC108 are carried out by the posture information change sensing section 25b.

In step FC109, conversion parameters (the mounting angle Δθ and the link length L) are calculated using the IMU data and the coordinate data that have been recorded. This process is carried out by the calibration value computing section 25d. When the conversion parameters have been calculated, control goes to step FC110.

In step FC110, the calculated conversion parameters are recorded in a memory of the controller 20. This process is carried by the calibration result recording section 25e.

If it is determined in step FC108 that there is a posture change (NO), then since the IMU data and the coordinate data that have been recorded are not suitable for calculating conversion parameters, the processing sequence comes to an end without calculating conversion parameters.

(Conclusions)

According to the present embodiment, the hydraulic excavator (construction machine) 100 includes the lower track structure 3, the upper swing structure 2 rotatably mounted on the lower track structure 3, the multi-joint work implement 1 rotatably mounted on the upper swing structure 2, the posture sensors 14 to 16 mounted on the work implement 1, and the controller 20 that converts posture data of the work implement 1 sensed by the posture sensors 14 to 16 into coordinates of a first predetermined position (bucket claw tip position) of the work implement 1 using predetermined conversion parameters (the mounting angle $\Delta\theta$ and the link length L), the controller 20 calculating updated values of the conversion parameters for calibration on the basis of the posture data of the work implement 1 sensed by the posture sensors 14 to 16 and the coordinates of second predetermined positions (the pin positions p0, p1, and p2) of the work implement 1 measured by the external measuring device 50. Further, in the hydraulic excavator 100, the controller 20 determines whether the work implement 1 is statically determinate or not on the basis of the posture data of the work implement 1 sensed by the posture sensors 14 to 16 during a predetermined time (steps FC103 to FC106) after the instruction to calibrate the conversion parameters has been given, and if the controller 20 has determined that the work implement 1 is statically determinate, the controller calculates updated values of the conversion parameters on the basis of the posture data of the work implement 1 sensed by the posture sensors 14 to 16 during the predetermined time and the coordinates of the second predetermined positions measured by the external measuring device 50 after the instruction to calibrate the conversion parameters has been given.

According to the present embodiment configured as described above, the conversion parameters (the mounting angle $\Delta\theta$ and the link length L) for converting the posture data of the work implement 1 into the coordinates of the first predetermined position (bucket claw tip position) of the work implement 1 are updated using the posture data and coordinates of the work implement 1 that have been acquired while the work implement 1 is being statically determinate. It is hereby made possible to improve the calibration accuracy of the machine guidance system or the machine control system that has a function to calculate the coordinates of the first predetermined position (bucket claw tip position) of the work implement 1.

[Second Embodiment]

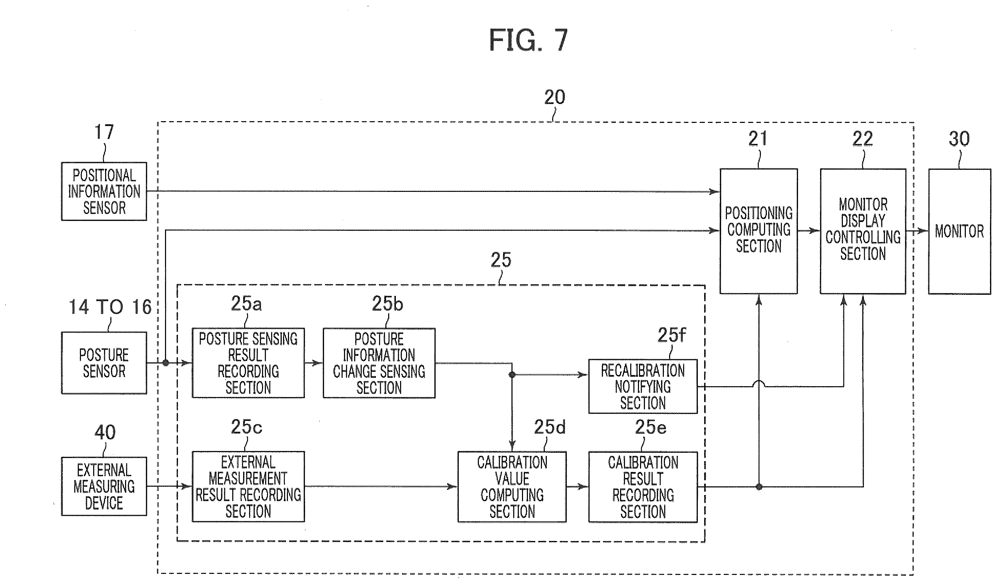

A second embodiment of the present invention will be described below primarily with respect to its differences from the first embodiment. FIG. 7 is a functional block diagram of a controller 20 according to the present embodiment. As illustrated in FIG. 7, the controller 20 according to the present embodiment is different from the first embodiment (illustrated in FIG. 3) in that a recalibration notifying section 25f is added to the calibration executing section 25. The recalibration notifying section 25f instructs the monitor display controlling section 22 to display on the monitor 30 information for prompting the operator to carry out recalibration if the posture information change sensing section 25b has determined that there is a posture change.

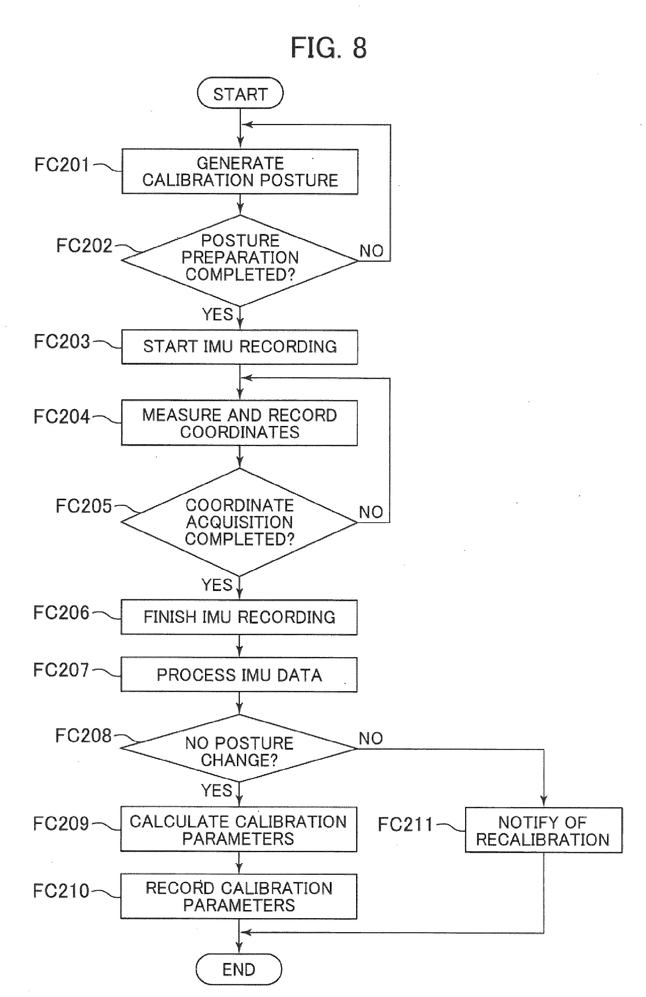

FIG. 8 is a flowchart of the processing sequence of the calibration executing section 25 according to the present embodiment. In FIG. 8, the processing of steps FC201 to FC210 is identical to steps FC101 to FC110 according to the first embodiment. The processing sequence illustrated in FIG. 8 is different from the first embodiment (illustrated in FIG. 6) in that step FC211 is added. If it has been determined in step FC208 that there is a posture change of the front work implement 1 (YES), then information for prompting the operator to carry out recalibration is notified to the operator, after which the processing sequence comes to an end. This process is carried out by the recalibration notifying section 25f.

(Conclusions)

The hydraulic excavator (construction machine) 100 according to the present embodiment includes the monitor (informing device) 30 capable of outputting information inputted from the controller 20, and when determining that the front work implement 1 is not statically determinate at the time of calibrating conversion parameters, the controller 20 outputs information prompting the operator to carry out recalibration to the monitor (informing device) 30.

According to the present embodiment configured as described above, it is possible for the operator to perform calibration quickly again when the posture of the front work implement 1 has changed while calibration is being carried out.

[Third Embodiment]

A third embodiment of the present invention will be described below primarily with respect to its differences from the first embodiment. The first embodiment is based on the prerequisite that the coordinate axes of the external measuring device 50 and the coordinate axes of the front work implement 1 are identical to each other (the Y coordinates remain unchanged when the pin position p0 and the pin position p1 are measured). This prerequisite is practical because the coordinate axis of the external measuring device 50 can be set freely. However, the prerequisite will fail if the operator makes a mistake in setting work of the coordinate axes. According to the first embodiment, conversion parameters are calculated using the data from the external measuring device 50 that have been acquired with one posture. If the external measuring device 50 suffers a measurement failure (for example, if it fails to aim at a correct coordinate position or a target attached to a pin position is displaced), correct computations cannot be carried out. According to the present embodiment, there have been added a function to verify whether the coordinate axes have been set correctly and a function to verify whether the coordinates acquired by the external measuring device 50 are appropriate.

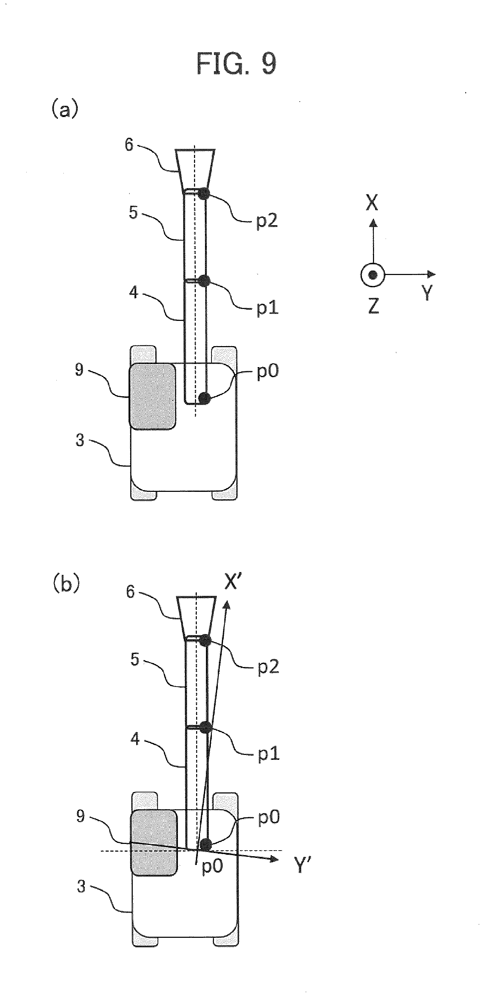

FIG. 9 is a set of views (bird's-eye views) of the hydraulic excavator 100 as viewed from above, and explanatory views of effects of the coordinate axes set by the external measuring device 50 on coordinate measurement.

FIG. 9(a) illustrates an ideal state where the X coordinates of the external measuring device 50 are set parallel to the direction of the front work implement 1. In contrast, FIG. 9(b) illustrates a state where coordinate axes X', Y', and Z rotated clockwise with respect to the front work implement 1 are set.

In the state illustrated in FIG. 9(a), since a straight line joining the boom foot pin position p0 and the boom tip pin position p1 lies parallel to the X-axis, the angle $\theta$BM-TS of the boom IMU 14 can be calculated using the equation 1. In the state illustrated in FIG. 9(b), however, as the straight line joining the boom foot pin position p0 and the boom tip pin position p1 does not lie parallel to the X'-axis, the equation 1 cannot be used.

States where the setting of the coordinate axes is not preferable can be sensed by checking the respective Y coordinates of the boom foot pin position p0 and the boom tip pin position p1. Specifically, if the Y coordinate (y0) of the boom foot pin position p0 and the Y coordinate (y1) of the boom tip pin position p1 are not equal to each other, then the coordinate axes are judged as inappropriate.

Further, if the Y-axis of the external measuring device 50 is set so as to be perpendicular to the plane in which the front work implement 1 rotates, then the Y coordinates of the pin positions p1 and p2 (the non-rotation central position about which the boom 4 does not rotate) remain unchanged when the posture of the boom 4 has changed. Consequently, where change amounts in the Y coordinates of the pin positions p1 and p2 acquired with a plurality of different postures exceed a threshold, it can be determined that the setting of the coordinate axes is not appropriate. Providing an allowable angle of rotation of a coordinate axis is represented by $\varphi$ (for example, 0.5deg.), an allowable change amount $\Delta$Y in the Y coordinate of the boom tip pin position p1 is given by the equation 7.

[Equation 7]

$$\Delta Y = L_{BM} \sin \phi$$

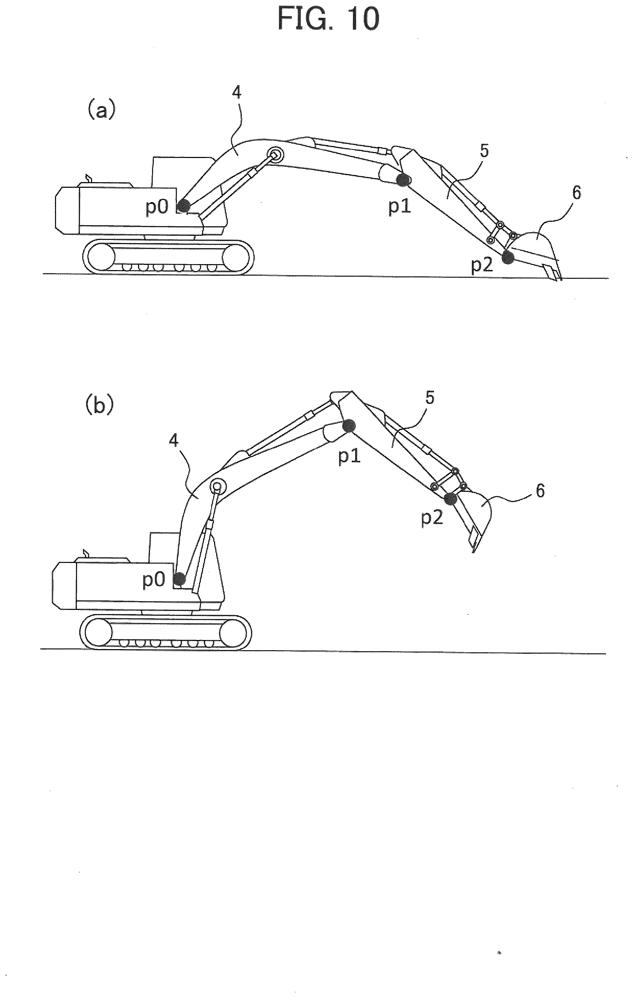

For determining whether a coordinate axis is set correctly or not, it is desirable to measure coordinates at a plurality of postures where change amounts in Y coordinates appear as large as possible. Therefore, a plurality of postures at which the X-coordinate of a pin to be measured changes as largely as possible are designated. For example, where the boom 4 is to be calibrated, the external measuring device 50 measures coordinates with two postures including a posture (illustrated in FIG. 10(a)) in which the boom 4 is lowered as much as possible and a posture (illustrated in FIG. 10(b)) in which the boom 4 is lifted as much as possible.

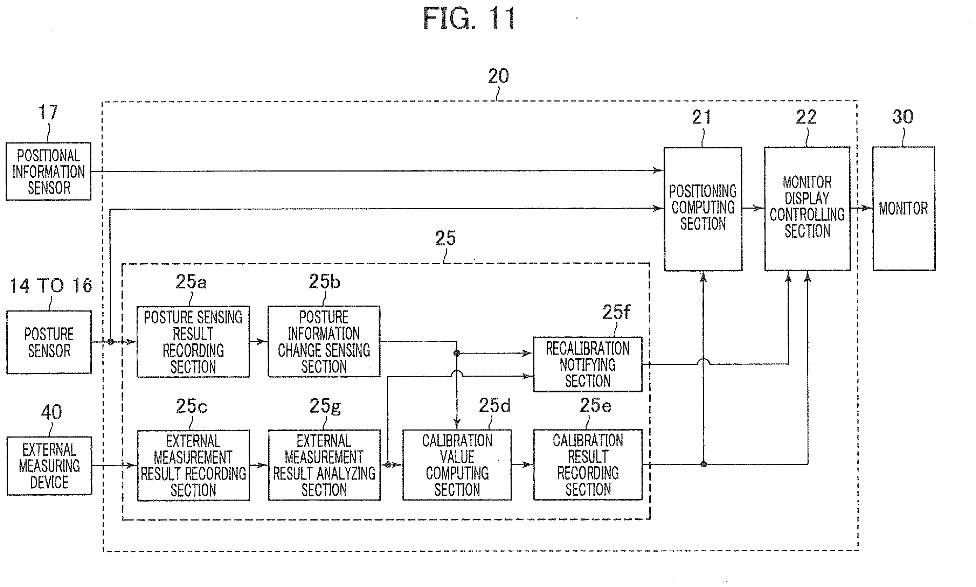

FIG. 11 is a functional block diagram of a controller 20 according to the present embodiment. As illustrated in FIG. 11, the controller 20 according to the present embodiment is different from that of the first embodiment (illustrated in FIG. 3) in that an external measurement result analyzing section 25g is added to the calibration executing section 25 and a function to notify of recalibration depending on the analysis result from the external measurement result analyzing section 25g is added to the recalibration notifying section 25f.

According to the present embodiment, as data are acquired at a plurality of postures, it is possible to calculate conversion parameters (the mounting angle $\Delta\theta$ and the link length L) a plurality of times. Accordingly, the posture sensing result recording section 25a records data and the posture information change sensing section 25b determines whether there is a posture change or not, with respect to each posture. Data acquired while a posture is being changed are not used for calibration.

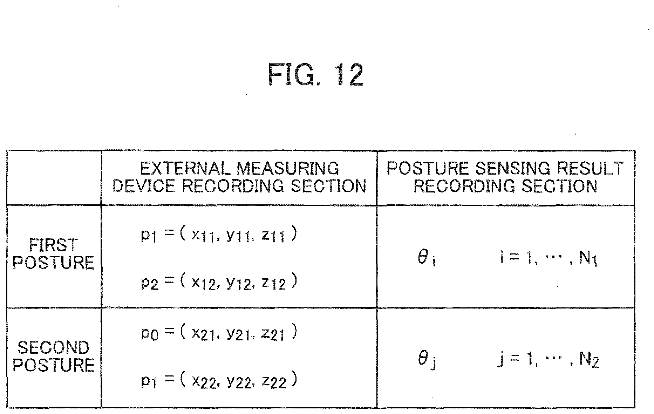

The external measurement result recording section 25c records the coordinates of the respective pin positions p0, p1, and p2 acquired at each posture. FIG. 12 illustrates an image of data recorded in the controller 20 in a case where the data are acquired at two postures. The external measurement result recording section 25c records the coordinate data of the respective pin positions p1 and p2 measured at the respective postures, and the posture sensing result recording section 20e1 records angle data successively recorded at the respective postures. The number N of data recorded in the posture sensing result recording section 25a varies depending on the time of calibration work.

The external measurement result analyzing section 25g analyzes the coordinate data recorded in the external measurement result recording section 25c, and verifies the validity of the coordinate axes and the acquired data.

The external measurement result analyzing section 25g can determine whether a coordinate axis is set correctly by determining whether change amounts in the Y coordinates of the pin positions p1 and p2 satisfy the condition (equations 8) that they are equal to or smaller than a threshold Th (for example, the measurement accuracy of the external measuring device 50).

[Equations 8]

$$|y_{11} - y_{21}| \leq \text{Th}$$

$$|y_{12} - y_{22}| \leq \text{Th}$$

If neither one of the equations 8 is satisfied, then it is determined that the coordinate axes of the external measuring device 50 are not appropriate. Note that the coordinate axes can be determined from only the Y coordinate of either one of the pin positions p1 and p2. However, the accuracy with which to determine the coordinate axes can be increased by using the Y coordinates of the two pin positions p1 and p2 as indicated by the equations 8.

Next, a method of checking the validity of each coordinate will be described below. First, when designating a plurality of postures, the existence of a position, which remains unchanged in the plurality of postures, is a prerequisite. For example, when a plurality of postures are generated by operating only the boom 4 for calibrating the boom 4, the boom foot pin position p0 remains unchanged in the postures. Focusing on this fact, if a change amount $\Delta p0$ in the boom foot pin position p0 that is represented by the equation 9 exceeds a predetermined threshold (for example, the measurement accuracy of the external measuring device 50), then it can be determined that the measuring conditions for the external measuring device 50 are inappropriate.

[Equation 9]

$$\Delta p_0 = \sqrt{(x_{10} - x_{20})^2 + (z_{10} - z_{20})^2}$$

Similarly, inasmuch as the link length that represent the distance between pins of one member does not change in short time, if change amounts in link lengths LMB1 and LMB2 of the boom 4 calculated for each measurement by the equations 10 exceed predetermined thresholds (for example, the measurement accuracy of the external measuring device 50), then it can be determined that the measuring conditions for the external measuring device 50 are inappropriate.

[Equations 10]

$$L_{BM1} = \sqrt{(z_{11} - z_{10})^2 + (x_{11} - x_{10})^2}$$

$$L_{BM2} = \sqrt{(z_{21} - z_{20})^2 + (x_{21} - x_{20})^2}$$

Where the external measurement result analyzing section 25g determines that the measuring conditions are inappropriate, since the coordinates recorded in the external measurement result recording section 25c are inappropriate for the calculation of conversion parameters, the recalibration notifying section 25f notifies of recalibration, and the calibration value computing section 25d does not calculate conversion parameters.

The calibration work at two postures has been described above. However, calibration work may be carried out at more postures. Note that two to four postures are desirable because, if too many postures are increased, the time required for calibration work unduly increases.

Inasmuch as measurements are made at a plurality of postures according to the present embodiment, conversion parameters (the mounting angle $\Delta\theta$ and the link length L) are calculated depending on a measurement count n. Various methods are deemed suitable for determining final conversion parameters (updated values of conversion parameters) from the conversion parameters obtained from each measurement. For example, the conversion parameters obtained from either one measurement may be selected as final parameters, or average values of conversion parameters obtained from each measurement as indicated by the equations 11 may be used as final parameters.

[Equations 11]

$$\Delta\theta = \frac{1}{n}\sum_{i=1}^{n}\Delta\theta_i$$

$$L = \frac{1}{n}\sum_{i=1}^{n}L_i$$

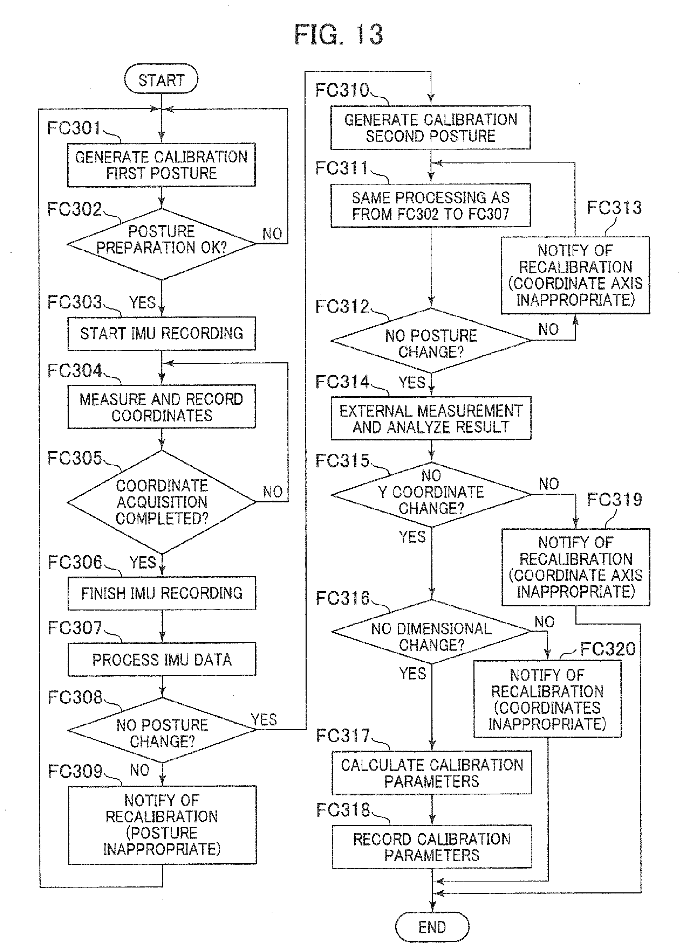

FIG. 13 is a flowchart of the processing sequence of the calibration executing section 25 according to the present embodiment. In FIG. 13, steps FC301 to FC308 are identical to steps FC101 to FC108 (illustrated in FIG. 6) according to the first embodiment.

If it is determined in step FC308 that there is a posture change (NO), then the need for recalibration is notified to the operator because inappropriate coordinates have been measured due to the posture change of the work implement 1 in step FC309, after which control goes back to step FC301. If it is determined in step FC308 that there is no posture change (YES), then control goes to step FC310.

In step FC310, an instruction is given to the operator to generate a predetermined second posture at the time where calibration is executed, which second posture is different from the predetermined first posture at the time where calibration is executed, which first posture has been instructed to be generated in step FC301, after which control goes to step FC311. In step FC311, the same processing as steps FC302 to FC307 is carried out, after which control goes to step FC312.

In step FC312, it is determined whether there is no posture change or otherwise. If it is determined that there is a posture change (NO), then the need for recalibration is notified to the operator because inappropriate coordinates have been measured due to the posture change of the work implement 1 (step FC313), after which control goes back to step FC311. If it is determined that there is no posture change (YES), then control goes to step FC314.

In step FC314, the coordinates of the positions p0, p1, and p2 acquired by the external measuring device 50 are analyzed. This process is executed by the external measurement result analyzing section 25g.

In step FC315, it is determined whether the Y coordinates of the positions p1 and p2 acquired at the first posture and the second posture have not changed or otherwise. If it is determined that the Y coordinates have changed (NO), then the need for recalibration is notified to the operator because the coordinate axes of the external measuring device 50 are inappropriate, and the processing sequence comes to an end without calculating conversion parameters. Therefore, it is possible to prevent conversion parameters from being calculated on the basis of coordinates measured with inappropriate coordinate axes and to allow the operator to correct the coordinate axes quickly.

If it is determined in step FC315 that the Y coordinates have not changed (YES), then control goes to step FC316 where it is determined whether the link lengths calculated at the respective postures have not changed or otherwise. If it is determined that the link lengths have changed (NO), then the need for recalibration is notified to the operator because the coordinates measured by the external measuring device 50 are inappropriate, and the processing sequence comes to an end without calculating conversion parameters. Therefore, it is possible to prevent conversion parameters from being calculated on the basis of inappropriate coordinates and to allow the operator to remeasure coordinates quickly.

If it is determined that the link lengths have not changed (YES) in step FC316, conversion parameters are calculated in step FC317, after which control goes to step FC318.

In step FC318, the conversion parameters are recorded in the memory of the controller 20, after which the processing sequence comes to an end.

(Conclusions)

The controller 20 according to the present embodiment acquires the coordinates of the non-rotation central position (the pin position p1) that have been measured by the external measuring device 50 at a plurality of postures where the rotation central position (the pin position p0) about which the work implement 1 rotates is not moved, determines that the coordinate axes of the external measuring device 50 are not appropriate when a change amount in a horizontal direction in the non-rotation central position at the postures exceeds a first threshold (the allowable change amount $\Delta Y$), and does not calculate updated values of the conversion parameters when it is determined that the coordinate axes of the external measuring device 50 are not appropriate even when the work implement 1 is determined as statically determinate at the time where the conversion parameters (the mounting angle $\Delta\theta$ and the link length L) are calibrated.

According to the present embodiment configured as described above, since the conversion parameters (the mounting angle $\Delta\theta$ and the link length L) are updated as long as the coordinate axes of the external measuring device 50 are appropriate, it is possible to calibrate the machine guidance system or the machine control system with a higher level of accuracy than with the first embodiment.

Moreover, the controller 20 according to the present embodiment acquires the coordinates of the rotation central position (the pin position p0) of the work implement 1 and the coordinates of the non-rotation central position (the pin position p1) of the work implement 1, which have been measured by the external measuring device 50 at a plurality of postures where the rotation central position of the work implement 1 is not moved, determines that the coordinates measured by the external measuring device 50 are not appropriate when a change amount in the distance between the rotation central position and the non-rotation central position at the postures exceeds a second threshold (for example, the measurement accuracy of the external measuring device 50), and does not calculate updated values of the conversion parameters when it is determined that the coordinates measured by the external measuring device 50 are not appropriate even when the work implement 1 is determined as statically determinate at the time where the conversion parameters (the mounting angle $\Delta\theta$ and the link length L) are calibrated. Consequently, since the conversion parameters (the mounting angle $\Delta\theta$ and the link length L) are updated as long as the coordinates measured by the external measuring device 50 are appropriate, it is possible to calibrate the machine guidance system or the machine control system with a higher level of accuracy than with the first embodiment.

Furthermore, the hydraulic excavator (construction machine) 100 according to the present embodiment includes the monitor (informing device) 30 capable of outputting information inputted from the controller 20, and the controller 20 acquires the coordinates of the rotation central position and the non-rotation central position of the work implement 1 that have been measured by the external measuring device 50 at a plurality of postures (the first posture and the second posture) where the rotation central position (the pin position p0) of the work implement 1 is not moved, determines that the coordinate axes of the external measuring device 50 are not appropriate when a change amount in a horizontal direction (a Y-axis direction) in the non-rotation central position at the postures exceeds a first threshold (the allowable change amount $\Delta Y$), determines that the coordinate axes measured by the external measuring device 50 are not appropriate when a change amount in the distance between the rotation central position and the non-rotation central position at the postures exceeds a second threshold (for example, the measurement accuracy of the external measuring device 50), does not calculate updated values of the conversion parameters when it is determined that the coordinate axes measured by the external measuring device 50 are not appropriate or the coordinates measured by the external measuring device 50 are not appropriate even when the work implement 1 is determined as statically determinate at the time where the conversion parameters (the mounting angle $\Delta\theta$ and the link length L) are calibrated, and outputs information prompting the operator to carry out recalibration to the monitor (informing device) 30 if it has been determined that the front work implement 1 has not been statically determinate, the coordinate axes measured by the external measuring device 50 are not appropriate, or the coordinates measured by the external measuring device 50 are not appropriate. Consequently, where the coordinate axes of the external measuring device 50 are not appropriate or the coordinates measured by the external measuring device 50 are not appropriate, it is possible for the operator to perform calibration again quickly.

[Fourth Embodiment]

A fourth embodiment of the present invention will be described below primarily with respect to its differences from the third embodiment. According to the third embodiment, although highly accurate calibration can be realized, problems arise in that many reworking occur when there is a posture change of the work implement 1 or when the coordinate axes of or the coordinates measured by the external measuring device 50 are inappropriate. The present embodiment solves these problems.

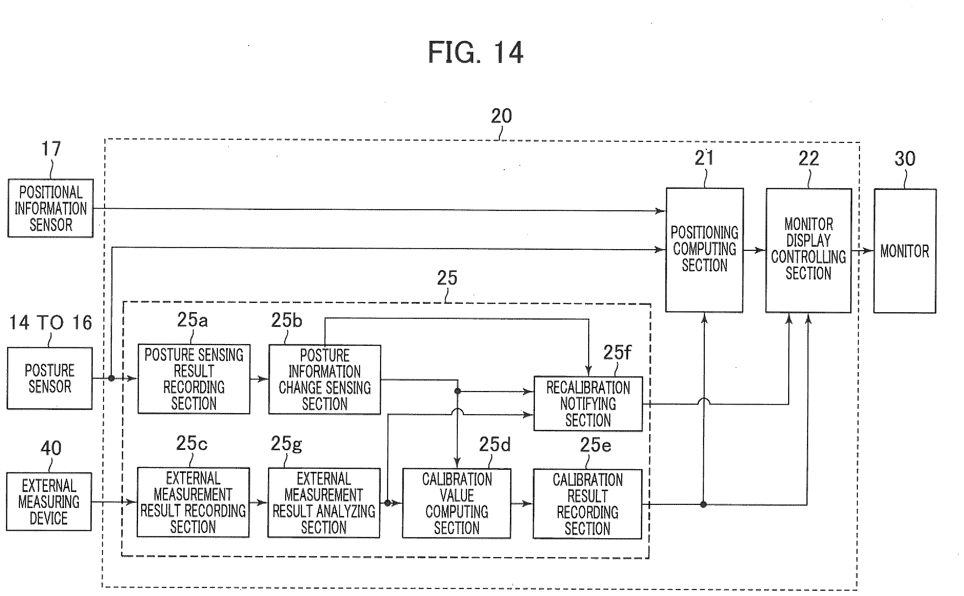

FIG. 14 is a functional block diagram of a controller according to the present embodiment. As illustrated in FIG. 14, the controller according to the present embodiment is different from the third embodiment (illustrated in FIG. 11) in that a function to notify of the timing of calibration work depending on the computation result from the posture information change sensing section 25b is added to the recalibration notifying section 25f.

The posture sensing result recording section 25a according to the present embodiment holds latest IMU data over a certain time (e.g., 3 minutes) in a buffer area at all times. The posture information change sensing section 25b analyzes the IMU data in the buffer area, and, in the absence of a posture change, prompts the operator to measure coordinates with the external measuring device 50 via the recalibration notifying section 25f. According to the first to third embodiments, the acquired data are analyzed subsequently, and data are recaptured when there is a posture change. According to the present embodiment, however, since the data from the external measuring device 50 are acquired after no posture change has been checked, it is expected that the recapturing of data will be reduced. Moreover, according to the present embodiment, the work efficiency is improved by changing the execution procedure from the third embodiment.

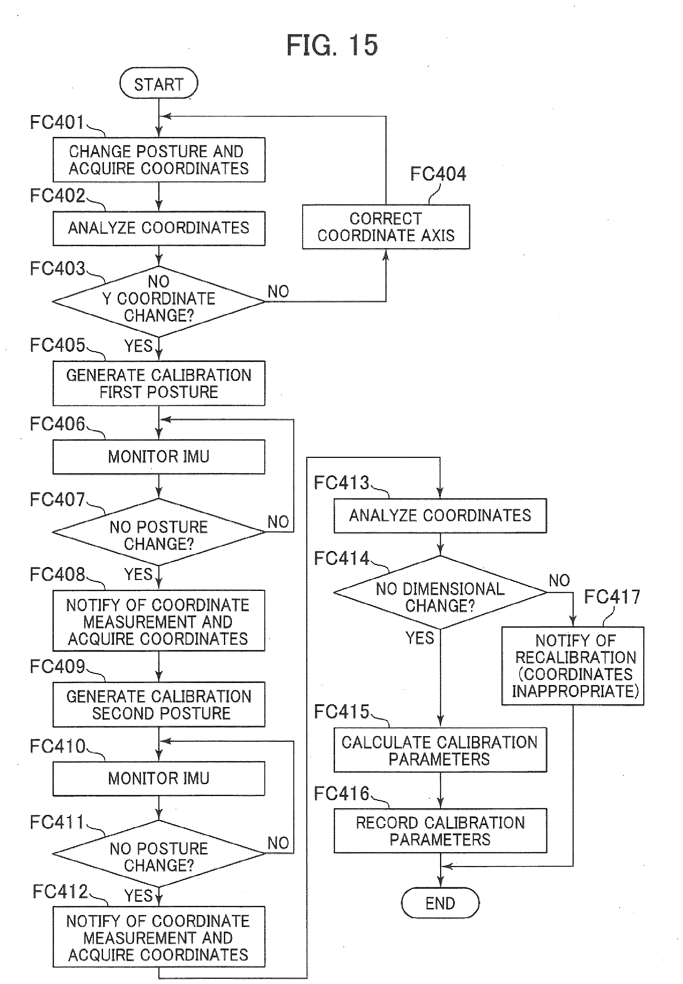

FIG. 15 is a flowchart of the processing sequence of a calibration executing section 25 according to the present embodiment.

First, in step FC401, the operator is instructed to rotate the work implement 1 without designating a particular posture, and while the operator rotates the work implement 1, the coordinates of the respective pin positions are acquired from the external measuring device 50. After the completion of the acquisition of the coordinates, control goes to step FC402.

In step FC402, the coordinates acquired from the external measuring device 50 are analyzed. Then, control goes to step FC403.

In step FC403, it is determined whether there is no change in the Y coordinates of the respective pin positions or otherwise. If it is determined that there is a change in the Y coordinates (NO), the operator is instructed to correct the coordinate axes of the front work implement 1 in step FC404, after which control goes back to step FC401. The operator causes the coordinate axes of the front work implement 1 to match the coordinates of the external measuring device 50 by swinging the upper swing structure 2. If it is determined that there is no change in the Y coordinates (YES), then control goes to step FC405. By thus initially correcting the coordinate axes, the number of reworking steps can be reduced. The above processing is carried out by the external measurement result recording section 25c and the external measurement result analyzing section 25g.

In step FC405, an instruction is given to the operator to generate a predetermined first posture at the time where calibration is executed. The operator generates the first posture according to the instruction. After the completion of generation of the first posture, control goes to step FC406.

In step FC406, the IMU data are monitored. In step FC407, it is determined whether there is no change in the IMU data (there is no posture change) or otherwise. If it is determined that there is a posture change (NO), then control goes back to step FC406. If it is determined that there is no posture change (YES), then control goes to step FC408.

In step FC408, the coordinates measured by the external measuring device 50 are acquired, after which control goes to step FC409.

In step FC409, an instruction is given to the operator to generate a predetermined second posture at the time where calibration is executed. The operator generates the second posture according to the instruction. After the completion of generation of the second posture, control goes to step FC410.

In step FC410, the IMU data are monitored. In step FC411, it is determined whether there is no change in the IMU data (there is no posture change) or otherwise. If it is determined that there is a posture change (NO), then control goes back to step FC410. If it is determined that there is no posture change (YES), then control goes to step FC412.

In step FC412, the coordinates measured by the external measuring device 50 are acquired, after which control goes to step FC413.

In step FC413, the coordinates measured by the external measuring device 50 are analyzed. In step FC414, it is determined whether there is no change in dimensions (the link length) of the work implement 1 or otherwise.

If it is determined in step FC413 that there is no change in the dimensions (YES), conversion parameters are calculated in step FC415. In step FC416, the conversion parameters are recorded, after which the processing sequence comes to an end.

If it is determined in step FC413 that there is a change in the dimensions (NO), then the need for recalibration is notified to the operator because inappropriate coordinates have been measured due to the change in the dimensions of the work implement 1, after which the processing sequence comes to an end.


(Conclusions)


The hydraulic excavator (construction machine) 100 according to the present embodiment includes the monitor (informing device) 30 capable of outputting information inputted from the controller 20, and the controller 20 outputs, to the monitor (informing device) 30, information prompting the operator to have the external measuring device 50 make measurements if the controller 20 determines that the front work implement 1 is statically determinate at the time of calibrating the conversion parameters (the mounting angle $\Delta\theta$ and the link length L).

According to the present embodiment configured as described above, as with the third embodiment, highly accurate calibration can be realized. Since reworking (remeasurement of coordinates) due to a posture change of the work implement 1 are avoided by measuring the coordinates with the external measuring device 50 after the work implement 1 has been checked as being statically determinate, the work efficiency of calibration can be improved.

The embodiments of the present invention have been described above. The present invention is not limited to the embodiments described above, but covers various changes and modifications therein. For example, the above embodiments have been described in detail for an easy understanding of the present invention, and the present invention should not be limited to any configurations including all the features described above. Moreover, some of the details of a certain embodiment may be added to the details of another embodiment or other embodiments, and details of a certain embodiment or embodiments may be deleted or replaced with details of another embodiment or other embodiments.

Description of Reference Characters

1: Front work implement
2: Upper swing structure
2a: Swing motor (hydraulic actuator)
3: Lower track structure
3a: Track motor (hydraulic actuator)
4: boom
4a: Boom cylinder (hydraulic actuator)
4b: Boom foot pin
5: Arm
5a: Arm cylinder (hydraulic actuator)
5b: Arm pin (boom tip pin)
6: Bucket
6a: Bucket cylinder (hydraulic actuator)
6b: Bucket pin
7: Hydraulic pump device
8: Control valve
9: Cabin
9a, 9b: Operation lever
13-16: IMU sensor (inertial measurement unit, posture sensor)
17: Positional information sensor
17a: GNSS antenna
17b: GNSS antenna
17c: GNSS receiver
18: Link member (bucket link)
20: Controller
21: Posture sensing result recording section
21: Positioning computing section
22: Monitor display controlling section
23: Hydraulic system controlling section
24: Target formation surface computing section
25: Calibration executing section
25a: Posture sensing result recording section
25b: Posture information change sensing section
25c: External measurement result recording section
25d: Calibration value computing section
25e: Calibration result recording section
25f: Recalibration notifying section
25g: External measurement result analyzing section
30: Monitor (informing device)
40: Storage device
50: External measuring device
100: Hydraulic excavator (construction machine)
p0: Boom foot pin position (second predetermined position, rotation central position)
p1: Boom tip pin position (second predetermined position, non-rotation central position)
p2: Bucket pin position (second predetermined position, non-rotation central position)

**Claims**

1. A construction machine comprising:

   a lower track structure;
   an upper swing structure rotatably mounted on the lower track structure;
   a multi-joint work implement rotatably mounted on the upper swing structure;

a posture sensor mounted on the work implement; and

a controller that is configured to convert posture data of the work implement, the posture data being sensed by the posture sensor, into coordinates of a first predetermined position of the work implement by using predetermined conversion parameters,

the controller being configured to calculate updated values of the conversion parameters to perform calibration on a basis of the posture data of the work implement, the posture data being sensed by the posture sensor, and coordinates of a second predetermined position of the work implement, the coordinates being measured by an external measuring device, wherein

the controller is configured to

determine whether the work implement is statically determinate or not on a basis of the posture data of the work implement, the posture data being sensed by the posture sensor during a predetermined time after an instruction to calibrate the conversion parameters has been given, and,

when determining that the work implement is statically determinate, calculate updated values of the conversion parameters on the basis of the posture data of the work implement sensed by the posture sensor during the predetermined time and the coordinates of the second predetermined position, the coordinates being measured by the external measuring device after the instruction to calibrate the conversion parameters has been given.

2. The construction machine according to claim 1, wherein

the construction machine includes an informing device capable of outputting information inputted from the controller, and

the controller is configured to output information prompting an operator to carry out recalibration to the informing device when determining that the work implement is not statically determinate at time of calibrating the conversion parameters.

3. The construction machine according to claim 1, wherein

the controller is configured

to acquire coordinates of a non-rotation central position of the working implement, the coordinates having been measured by the external measuring device at a plurality of postures where a rotation central position of the work implement is not moved,

to determine that coordinate axes of the external measuring device are not appropriate when a change amount in a horizontal direction in the non-rotation central position at the postures exceeds a first threshold, and

not to calculate the updated values when it is determined that the coordinate axes of the external measuring device are not appropriate even when determining that the work implement is statically determinate at time where the conversion parameters are calibrated.

4. The construction machine according to claim 1, wherein

the controller is configured

to acquire coordinates of rotation central position and non-rotation central position of the working implement, the coordinates having been measured by the external measuring device at a plurality of postures where the rotation central position of the work implement is not moved,

to determine that the coordinates measured by the external measuring device are not appropriate when a change amount in a distance between the rotation central position and the non-rotation central position at the postures exceeds a second threshold, and

not to calculate the updated values when it is determined that the coordinates measured by the external measuring device are not appropriate even when determining that the work implement is statically determinate at time where the conversion parameters are calibrated.

5. The construction machine according to claim 1, wherein

the construction machine includes an informing device capable of outputting information inputted from the controller, and

the controller is configured

to acquire coordinates of a rotation central position and a non-rotation central position of the working implement, the coordinates having been measured by the external measuring device at a plurality of postures where the rotation central position of the work implement is not moved,

to determine that coordinate axes of the external measuring device are not appropriate when a change amount in a horizontal direction in the non-rotation central position at the postures exceeds a first threshold,

to determine that coordinates measured by the external measuring device are not appropriate when a change amount in a distance between the rotation central position and the non-rotation central position at the postures exceeds a second threshold,

not to calculate the updated values when it is determined that the coordinate axes measured by the external measuring device are not appropriate or the coordinates measured by the external measuring device are not appropriate even when determining that the work implement is determined as statically determinate at time where the conversion parameters are calibrated, and

to output information prompting an operator to carry out recalibration to the informing device when determining that the work implement is not statically determinate, the coordinate axes measured by the external measuring device are not appropriate, or the coordinates measured by the external measuring device are not appropriate.

6. The construction machine according to claim 1, wherein

the construction machine includes an informing device capable of outputting information inputted from the controller, and

the controller is configured to output information prompting an operator to have the external measuring device make measurements to the informing device when determining that the work implement is statically determinate at time of calibrating the conversion parameters.

# FIG. 1

# FIG. 2

FIG. 3

EP 4 506 514 A1

# FIG. 4

(a)

30

POSTURE PREPARATION
COMPLETED?

| YES | NO |

(b)

30

p1

p0

EXTERNAL MEASUREMENT DATA
ACQUISION COMPLETED?

| YES | NO |

# FIG. 5

(a)

(b)

(c)

# FIG. 6

```
                    ( START )
                        │
                        ▼
  FC101 ─── ┌─────────────────────────┐
            │       GENERATE          │
            │   CALIBRATION POSTURE   │
            └─────────────────────────┘
                        │
                        ▼
  FC102 ───      ╱  POSTURE  ╲           NO
              ╱  PREPARATION    ╲ ─────────┐
              ╲   COMPLETED?   ╱           │
                  ╲        ╱               │
                    YES │                  │
                        ▼                  │
  FC103 ─── ┌─────────────────────────┐   │
            │   START IMU RECORDING    │   │
            └─────────────────────────┘   │
                        │                  │
                        ▼                  │
  FC104 ─── ┌─────────────────────────┐   │
            │   MEASURE AND RECORD     │   │
            │      COORDINATES         │   │
            └─────────────────────────┘   │
                        │                  │
                        ▼                  │
  FC105 ───     ╱ COORDINATE ╲     NO      │
              ╱  ACQUISITION    ╲ ─────────┤
              ╲   COMPLETED?   ╱           │
                  ╲        ╱               │
                    YES │                  │
                        ▼                  │
  FC106 ─── ┌─────────────────────────┐   │
            │   FINISH IMU RECORDING   │   │
            └─────────────────────────┘   │
                        │                  │
                        ▼                  │
  FC107 ─── ┌─────────────────────────┐   │
            │     PROCESS IMU DATA     │   │
            └─────────────────────────┘   │
                        │                  │
                        ▼                  │
  FC108 ───     ╱ NO POSTURE ╲     NO      │
              ╱    CHANGE?      ╲ ─────────┤
                  ╲        ╱               │
                    YES │                  │
                        ▼                  │
  FC109 ─── ┌─────────────────────────┐   │
            │  CALCULATE CALIBRATION   │   │
            │       PARAMETERS         │   │
            └─────────────────────────┘   │
                        │                  │
                        ▼                  │
  FC110 ─── ┌─────────────────────────┐   │
            │   RECORD CALIBRATION     │   │
            │       PARAMETERS         │   │
            └─────────────────────────┘   │
                        │◄─────────────────┘
                        ▼
                    ( END )
```

# FIG. 7

# FIG. 8

START

FC201 — GENERATE CALIBRATION POSTURE

FC202 — POSTURE PREPARATION COMPLETED? — NO

YES

FC203 — START IMU RECORDING

FC204 — MEASURE AND RECORD COORDINATES

FC205 — COORDINATE ACQUISITION COMPLETED? — NO

YES

FC206 — FINISH IMU RECORDING

FC207 — PROCESS IMU DATA

FC208 — NO POSTURE CHANGE? — NO

YES

FC209 — CALCULATE CALIBRATION PARAMETERS

FC211 — NOTIFY OF RECALIBRATION

FC210 — RECORD CALIBRATION PARAMETERS

END

# FIG. 9

(a)

(b)

# FIG. 10

(a)

(b)

# FIG. 11

EP 4 506 514 A1

# FIG. 12

| | EXTERNAL MEASURING DEVICE RECORDING SECTION | POSTURE SENSING RESULT RECORDING SECTION |
|---|---|---|
| FIRST POSTURE | $p_1 = (x_{11}, y_{11}, z_{11})$<br><br>$p_2 = (x_{12}, y_{12}, z_{12})$ | $\theta_i \qquad i = 1, \cdots, N_1$ |
| SECOND POSTURE | $p_0 = (x_{21}, y_{21}, z_{21})$<br><br>$p_1 = (x_{22}, y_{22}, z_{22})$ | $\theta_j \qquad j = 1, \cdots, N_2$ |

# FIG. 13

# FIG. 14

EP 4 506 514 A1

# FIG. 15

START

FC401 — CHANGE POSTURE AND ACQUIRE COORDINATES

FC402 — ANALYZE COORDINATES

FC403 — NO Y COORDINATE CHANGE?

FC404 — CORRECT COORDINATE AXIS

FC405 — GENERATE CALIBRATION FIRST POSTURE

FC406 — MONITOR IMU

FC407 — NO POSTURE CHANGE?

FC408 — NOTIFY OF COORDINATE MEASUREMENT AND ACQUIRE COORDINATES

FC409 — GENERATE CALIBRATION SECOND POSTURE

FC410 — MONITOR IMU

FC411 — NO POSTURE CHANGE?

FC412 — NOTIFY OF COORDINATE MEASUREMENT AND ACQUIRE COORDINATES

FC413 — ANALYZE COORDINATES

FC414 — NO DIMENSIONAL CHANGE?

FC417 — NOTIFY OF RECALIBRATION (COORDINATES INAPPROPRIATE)

FC415 — CALCULATE CALIBRATION PARAMETERS

FC416 — RECORD CALIBRATION PARAMETERS

END

## INTERNATIONAL SEARCH REPORT

| International application No. |
| --- |
| **PCT/JP2023/013427** |

### A. CLASSIFICATION OF SUBJECT MATTER

**E02F 9/26**(2006.01)i; **G01C 9/06**(2006.01)i; **G01C 15/00**(2006.01)i
FI:   E02F9/26 B; G01C15/00 104Z; G01C9/06 Z

According to International Patent Classification (IPC) or to both national classification and IPC

### B. FIELDS SEARCHED

Minimum documentation searched (classification system followed by classification symbols)

E02F9/00-9/28,E02F26; G01C9/06; G01C15/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 5823046 B1 (KOMATSU LTD.) 25 November 2015 (2015-11-25)<br>entire text, all drawings | 1-6 |
| A | JP 2021-63825 A (KABUSHIKI KAISHA TOPCON) 22 April 2021 (2021-04-22)<br>entire text, all drawings | 1-6 |
| A | JP 2017-181340 A (HITACHI CONSTRUCTION MACHINERY CO., LTD.) 05 October 2017 (2017-10-05)<br>entire text, all drawings | 1-6 |

☐ Further documents are listed in the continuation of Box C.      ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **26 April 2023** | **16 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

### INTERNATIONAL SEARCH REPORT
#### Information on patent family members

International application No.

**PCT/JP2023/013427**

| Patent document cited in search report | | | Publication date (day/month/year) | Patent family member(s) | | | Publication date (day/month/year) |
|---|---|---|---|---|---|---|---|
| JP | 5823046 | B1 | 25 November 2015 | US | 2015/0330060 | A1 | |
| | | | | entire text, all drawings | | | |
| | | | | WO | 2015/173920 | A1 | |
| | | | | KR | 10-2016-0003678 | A | |
| | | | | CN | 105636658 | A | |
| JP | 2021-63825 | A | 22 April 2021 | WO | 2018/164079 | A1 | |
| | | | | entire text, all drawings | | | |
| JP | 2017-181340 | A | 05 October 2017 | (Family: none) | | | |

Form PCT/ISA/210 (patent family annex) (January 2015)

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017181340 A